(19) Europäisches Patentamt
European Patent Office
Office européen des brevets

(11) Veröffentlichungsnummer: **0 083 732**
**B1**

(12) # EUROPÄISCHE PATENTSCHRIFT

(45) Veröffentlichungstag der Patentschrift: **22.05.85**

(51) Int. Cl.⁴: **C 08 G 18/79**, C 09 D 3/72

(21) Anmeldenummer: **82111181.2**

(22) Anmeldetag: **02.12.82**

(54) **Thermisch und oxidationsbeständige Polyurethanbeschichtungen.**

(30) Priorität: **30.12.81 DE 3151854**

(43) Veröffentlichungstag der Anmeldung: **20.07.83 Patentblatt 83/29**

(45) Bekanntmachung des Hinweises auf die Patenterteilung: **22.05.85 Patentblatt 85/21**

(84) Benannte Vertragsstaaten: **AT BE CH DE FR GB IT LI LU NL SE**

(56) Entgegenhaltungen:
**FR - A - 1 343 812**
**US - A - 3 631 198**

(73) Patentinhaber: **CHEMISCHE WERKE HÜLS AG, Postfach 1320, D-4370 Marl 1 (DE)**

(72) Erfinder: **Disteldorf, Josef, Dr., Am Sengenhoff 2a, D-4690 Herne 1 (DE)**
Erfinder: **Flakus, Werner, Dr., Dürerstrasse 23, D-4350 Recklinghausen (DE)**

(74) Vertreter: **Stell, Hanna, Dipl.-Chem., RSP PATENTE - PB 15 Postfach 1320, D-4370 Marl 1 (DE)**

EP 0 083 732 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Polyurethanbeschichtungen auf Basis eines neuen Isocyanatoisocyanurats.

Auf der Basis aromatischer Polyisocyanate und geeigneter Hydroxylkomponenten sind gute PUR-Werkstoffe und Beschichtungen herstellbar; der Nachteil ist jedoch ihre Vergilbungstendenz, z.B. im Tageslicht.

Für anspruchsvollere Anwendungen ist es daher erforderlich, cyclische Polyisocyanate wie z.B. Isophorondiisocyanat (IPDI) oder seine Oligomere bzw. Addukte mit strukturell abgestimmten Hydroxylverbindungen zu lichtstabilen PUR-Systemen umzusetzen. Dergleichen Endprodukte sind auch thermisch und oxidationsbeständig. Doch sind solche Harze für die Kalthärtung wenig geeignet und werden vorzugsweise für die Heisshärtung eingesetzt. Die Harze sind gut verträglich, bilden aber keine überragend lösungsmittelbeständigen Beschichtungen.

Aliphatische Polyisocyanate, ihre Oligomeren und Addukte sind in Kombination mit entsprechend geeigneten Hydroxylverbindungen hinreichend bekannte Reaktivsysteme für die Kalthärtung. Bei der Heisshärtung oder Wärmelagerung neigen sie zur Vergilbung. Das gilt sowohl für die monomeren Diisocyanat wie für die Biuretformen, die Isocyanurate und Diol-/Trioladdukte und bezieht sich auf die in der Literatur bekannten aliphatischen Diisocyanate und die vorgenannten Derivate wie z.B. das Hexamethylendiisocyanat (HDI), das 2,2,4(2,4,4)-Trimethylhexamethylendiisocyanat (TMDI) oder das 2-Methylnonamethylendiisocyanat (MNDI).

Ausgehend von bicyclischen und tricyclischen Isocyanaten erzielt man mit geeigneten Hydroxylderivaten PUR-Beschichtungen von bemerkenswerter thermischer Stabilität, aber deutlicher Vergilbungstendenz und geringer Wetterstabilität. Als Beispiel sei genannt das Tricyclodecandiisocyanat (TCDI).

Es wurde nun überraschend gefunden, dass ausgehend von Isocyanatoisocyanuraten der folgenden Formel

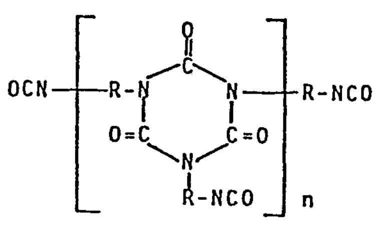

in der die einzelnen Reste R gleich oder verschieden sind und Kohlenwasserstoffreste einer der Formeln

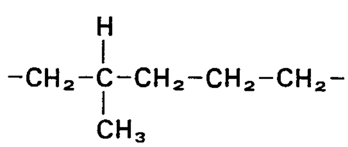

oder

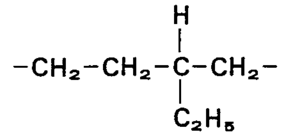

bedeuten und n eine ganze oder gebrochene Zahl von 1 bis 5 bedeutet, als Isocyanatkomponente mit einer hydroxylgruppenhaltigen Komponente PUR-Beschichtungen von überragender Qualität gebildet werden, die die vorstehend genannten Nachteile nicht zeigen.

Die Isocyanatoisocyanurate vorstehender Formel sind nicht Gegenstand dieser Patentanmeldung. Sie entstehen durch partielle Trimerisierung von aus einem Diisocyanat der Formel

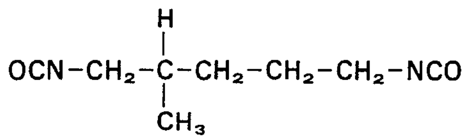

und gegebenenfalls einem Diisocyanat der Formel

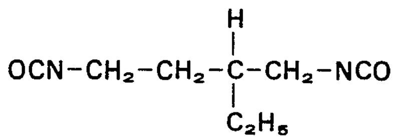

bestehenden Diisocyanat bzw. Diisocyanatgemisch.

Die Trimerisierung kann im Prinzip mit allen bekannten Trimerisierungskatalysatoren erfolgen z.B. gemäss DE-A Nrn. 2644684, 2916201 und GB-A Nr. 837120. Als Ausgangsmaterial dienen reine Diisocyanate der erstgenannten Formel oder Gemische der beiden Diisocyanate.

Die Diisocyanatgemische weisen im allgemeinen folgende Zusammensetzung auf:

88-99 Gew.-% 2-Methyl-1,5-diisocyanatopentan (MPDI)

12-1 Gew.-% 2-Ethyl-1,4-diisocyanatobutan (EBDI)

Die Herstellung der Diisocyanate bzw. Diisocyanatgemische erfolgt in bekannter Weise durch Phosgenierung der entsprechenden Amine (vgl. z.B. US-A Nr. 3631198).

Gegenstand der Erfindung sind daher Massen für thermisch und oxidationsbeständige Polyurethanbeschichtungen, bestehend aus

a) einer organischen, polymeren Verbindung mit Hydroxylgruppen

b) einem Polyisocyanat, und

c) gegebenenfalls üblichen Hilfsstoffen wie Lösungsmittel, Dispergiermittel, Pigmente, Füllstoffe, Verlaufmittel,

dadurch gekennzeichnet, dass als Polyisocyanat Isocyantoisocyanurate der Formel

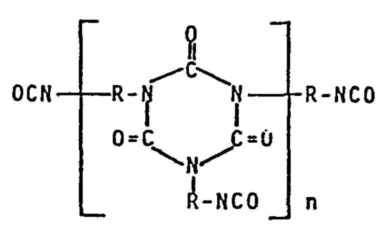

in der die einzelnen Reste R gleich oder verschieden sind und Kohlenwasserstoffreste einer der Formeln

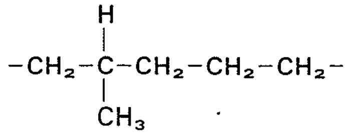

oder

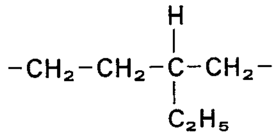

bedeuten und n eine ganze oder gebrochene Zahl von 1 bis 5 bedeutet, eingesetzt werden.

Als organische, polymere Hydroxylverbindung werden hydroxylgruppenhaltige Polyacrylatverbindungen (Oxyacrylate) oder hydroxylgruppenhaltige Polyester (Oxyester) eingesetzt.

Die überragende Qualität der entsprechenden Polyurethanbeschichtungen besteht in der einmaligen Thermooxidationsbeständigkeit bis 240°C ohne Vergilbungserscheinungen, die von üblichen aliphatischen Polyisocyanaten – wie sie eingangs erwähnt wurden – nicht erzielt werden kann und nur Polyurethanen der Basis cyclischer sterisch gehinderter Polyisocyanate wie z.B. IPDI zu eigen sind.

Die Qualität der Polyurethane wird sowohl bei Kalthärtung wie auch Heisshärtung der Reaktionskomponenten erzielt. Ein weiteres überragendes Prädikat der erfindungsgemäss hergestellten Polyurethane ist ihre Licht- und Wetterstabilität, die solche der Basis cyclischer, sterischer gehinderter Polyisocyanate überlegen ist.

Die Lösungsmittelbeständigkeit der Polyurethane ist massgeblich besser als von cyclischen Polyisocyanaten resultierenden Polyurethanen. Dieses Prädikat ist umso überraschender als die Reaktionskomponenten, die verwendet werden zur Ausbildung der erfindungsgemässen Beschichtungen gut verträgliche und leicht lösliche Harze vorstellen.

Die Polyurethane besitzen weiterhin gute mechanische Filmeigenschaften.

Zur Herstellung von PUR-Beschichtungen der vorgangs beschriebenen Qualitätsbreite werden als Hydroxylkomponente, vorzugsweise solche verwendet, die als kommerzielle Produkte verbreitet und verfügbar sind wie hydroxylhaltige Polyacrylatverbindungen (Oxyacrylate) und hydroxylhaltige Polyester (Oxyester), soweit sie nach Hydroxyläquivalenten, Struktur und Qualität für eine Kombination mit erfindungsgemäss eingesetztem Isocyanurat geeignet sind.

Es können je nach Applikationsabsicht lösungsmittelfreie Beschichtungen ausgeführt werden.

Die Beschichtungen können klare Filme und Folien vorstellen, aber auch pigmentierte oder gefüllte Systeme beinhalten, sowie weitere Hilfsmittel wie Verlaufmittel, Farbstoffe, Thixotropiermittel usw. enthalten.

Die PUR-Systeme können harte, mittelharte oder weiche, jeweils elastische Endprodukte beinhalten. Sie können als Substratbeschichtungen für z.B. Metall, Kunststoff, Holz, Beton usw. Verwendung finden.

Die Beispiele sind in den Tabellen 1 bis 4 zusammengefasst, in allen Systemen wurde als Lösungsmittel Ethylglykolacetat (EGA)/Xylol im Gew.-Verhältnis 2:1 verwendet.

Die Thermooxidationsstabilität kann z.B. an kalt- oder heissgehärteten Stahlblechbeschichtungen in sehr einfacher Weise ermittelt werden, wenn man solche Beschichtungen 10 min bei 240°C tempert und das Ausmass der dabei auftretenden Verfärbung graduell registriert.

In Tabelle 1 ist das Thermooxidationsverhalten von Polyurethanbeschichtungen hergestellt aus verschiedenen Polyisocyanaten und den Oxyestersystemen Desmophen 651 ® der Fa. Bayer AG, Hydroxylzahl 263 mg KOH/g, dem erfindungsgemässen Beschichtungssystem mit dem vorgenannten Oxyester gegenübergestellt.

Die Farbveränderungen wurden wie folgt differenziert:

0-1 = weiss  
2-3 = minimale Gelbfärbung  
4-5 = merkliche Gelbfärbung  
6-7 = intensive Gelbfärbung  
8-9 = beige Verfärbung

*(Tabelle auf der nächsten Seite)*

In Tabelle 2 ist das Kalthärtungsvermögen (Pendelhärten am 1., 3. und 7. Tag im Vergleich zur Heisshärtung) der erfindungsgemäss beanspruchten Polyurethansysteme jeweils in Kombination mit dem Oxyestersystem Desmophen 651® der Fa. Bayer dargestellt.

Die Erichsentiefungswerte der erfindungsgemäss beanspruchten Beschichtungen zeigen eine gute Elastizität, während besonders die 20° Gardner-Glanzwerte einen hohen Glanz und damit eine hervorragende Verträglichkeit der Harzsysteme belegen.

*(Tabelle auf der nächsten Seite)*

In Analogie zu den Darstellungen zu Tabelle 2 sind in Tabelle 3 erfindungsgemäss beanspruchte Polyurethanbeschichtungen, ausgehend von Oxyacrylaten im Vergleich mit anderen Polyisocyanaten zusammengestellt (Kalthärtung, Glanz, Erichsentiefung). Darüber hinaus wird die ausgezeichnete Lösungsmittelbeständigkeit der MPDI-Isocyanuratbeschichtung nachgewiesen.

*Tabelle 3:*

Filmdaten von Polyurethanen hergestellt aus verschiedenen Polyisocyanaten und Umsetzung mit dem Oxyacrylatsystem Lumitol ® AM 80 der Fa. BASF AG, OHZ=80 mg KOH/g

Umsatz NCO/OH = 1:1  
Pigmentierung: $TiO_2$ Kronos Cl 220, PVK 15  
Katalysator: 0,1% Sn II-Octoat

*(Tabelle auf der nächsten Seite)*

Der Osram-Sylt-Test in Gegenwart von Wasser gestattet eine qualitative Differenzierung der Licht- und Wetterstabilität von Filmen verschiede-

*Tabelle 1*

Thermooxidationsstudie: 10 min Temperung bei 240° C von kalt und heissgehärteten Polyurethanbeschichtungen, ausgehend von Polyisocyanaten jeweils in Kombination mit dem Oxyestersystem Desmophen 651®, der Fa. Bayer AG.
OH/NCO Umsatz = 1:1
PVK 15
$TiO_2$ Kronos Cl 310 der Fa. Kronos Titan GmbH

| Polyisocyanate | Farbbefund Ausgangsblech | Farbbefund nach 10 min Temperierung bei 240° C |
|---|---|---|
| 4,4'-Diisocyanatodicyclohexyl-methan (Hylen W) | 0 | 1 |
| Tricyclodecandiisocyanat (TCDI) | 0 | 9 |
| Dodecamethylendiisocyanat (DDDI) | 0 | 7 |
| Isophorondiisocyanat/Trimethylol-propan-Addukt (IPDI/TMP) (3:1) | 0 | 1 |
| 2-Methylpentamethylendiisocyanat/ TMP-Addukt 2-MPDI/TMP (3:1) | 0 | 2 |
| IPDI-Isocyanurat | 0 | 1 |
| 2-MPDI-Isocyanurat Erfindung | 0 | 1 |
| HDI-Isocyanurat | 0 | 4 |
| 2,2,4(2,4,4)-Trimethylhexa-methylendiisocyanat (TMDI)-Isocyanurat | 0 | 4 |
| 5-Methylnonamethylendiisocyanat 5-MNDI-Biuret | 0 | 8 |
| Hexamethylendiisocyanat-Biuret (HDI) | 0 | 9 |

*Tabelle 2*

*(Stahlbleche)*

Filmdaten von Polyurethanen hergestellt aus verschiedenen Polyisocyanaten in Kombination mit dem Oxyestersystem Desmophen 651® der Fa. Bayer AG.
OH-Zahl = 263 mg KOH/g
Umsatz NCO/OH = 1:1
Pigmentierung: $TiO_2$, Kronos Cl 310 der Fa. Kronos Titan GmbH, PVK 15
Katalysator: 0,1% Tributylamin +0,01% Dibutylzinndilaurat

| Polyisocyanat-Komponente* | Schichtdicke (µm) | Pendelhärte König DIN 53157 (ms) 1. | 3. | 7. Tag | Erichsentiefung DIN 53156 (mm) | Gardner-Werte ASTM-D 523 20° | 60° | 85° |
|---|---|---|---|---|---|---|---|---|
| HDI-Isocyanurat | 50 | 183 | — | — | 7,0 | 73 | 86 | 95 |
| | 55 | 51 | 117 | 128 | 7,4 | 75 | 88 | 96 |
| HDI-Biuret | 60 | 179 | — | — | 7,1 | 83 | 90 | 96 |
| | 60 | 10 | 147 | 200 | 2,4 | 79 | 88 | 90 |

*Tabelle 2 (Fortsetzung)*

| Polyisocyanat-Komponente* | Schichtdicke (µm) | Pendelhärte König DIN 53157 (ms)<br>1. 3. 7. Tag | Erichsentiefung DIN 53156 (mm) | Gardner-Werte ASTM-D 523<br>20° 60° 85° |
|---|---|---|---|---|
| 2-MPDI-Isocyanurat Erfindung | 40<br>50 | 187 — —<br>46 146 186 | 6,0<br>7,9 | 83 91 96<br>84 93 96 |
| 2-MPDI/TMP-Addukt | 50<br>50 | 179 — —<br>18 108 119 | 8,3<br>9,0 | 77 84 96<br>76 84 96 |
| IPDI-Isocyanurat | 60<br>50 | 187 — —<br>42 84 127 | 0,3<br>1,3 | 46 75 89<br>58 77 90 |

* jeweils 30 s bei 130° C und Kalthärtung

*Tabelle 3*

| Polyisocyanat-Komponente* | Schichtdicke (µm) | Pendelhärte König DIN 53157 (ms)<br>1. 3. 7. Tag | Erichsentiefung DIN 53156 (mm) | Glanzwerte-Gardner ASTM-D 523<br>20° 60° 80° | Lösungsmittelbeständigkeit (Reibtest)<br>(+) = beständig<br>(−) = anfällig | | |
|---|---|---|---|---|---|---|---|
| | | | | | MEK | Xyol | Ethylglycolacetat |
| HDI-Isocyanurat | 50<br>40 | 165 — —<br>13 105 113 | 9,3<br>9,9 | 72 89 96<br>73 87 99 | + | + | + |
| HDI-Biuret | 60<br>60 | 160 — —<br>10 44 85 | 9,2<br>10,0 | 59 84 94<br>70 88 95 | − | − | − |
| 2-MPDI-Isocyanurat Erfindung | 50<br>60 | 171 — —<br>16 74 159 | 8,4<br>9,8 | 83 90 99<br>78 87 97 | + | + | + |
| 2-MPDI-TMP Addukt (3:1) | 60<br>60 | 176 — —<br>13 68 111 | 9,0<br>>10,0 | 72 90 93<br>75 86 95 | + | + | + |
| IPDI-Isocyanurat | 70<br>60 | 183 — —<br>18 64 115 | 0,5<br>0,4 | 75 90 96<br>70 88 95 | − | − | − |

* jeweils 30 s, 130° C und Kalthärtung
MEK = Methylethylketon

ner Harzzusammensetzungen. Als Massstab der Beurteilung fungieren die Glanzwerte nach Gardner (ASTM-D 523), die im zeitlichen Abstand von 1000 und 2000 h dargestellt wurden.

In Tabelle 4 ist die Licht- und Wetterstabilität der erfindungsgemäss hergestellten Beschichtung 2-MPDI-Isocyanurat/Oxyacrylat, Lumitol ® AM 80 im Vergleich mit anderen Polyisocyanatanalogsystemen dargestellt.

*Tabelle 4*

Osram-Sylt-Test – Gardner-Glanzwerte ASTM-D 523
Polyurethansysteme hergestellt aus verschiedenen Polyisocyanaten jeweils durch Umsetzung mit dem Oxyacrylatsystem Lumitol® AM 80 der Fa. BASF AG
NCO/OH Umsatz 1:1
Pigmentierung: $TiO_2$, Kronos Cl 220 der Fa. Kronos Titan GmbH, PVK 15

| Polyisocyanate* | Ausgangsglanzwerte 20° | 60° | 85° | Glanzwerte nach 1000 h Osram-Sylt-Test 20° | 60° | 85° | Glanzwerte nach 2000 h Osram-Sylt-Test 20° | 60° | 80° |
|---|---|---|---|---|---|---|---|---|---|
| HDI-Biuret | 59 | 84 | 94 | 52 | 75 | 95 | 37 | 62 | 92 |
| HDI-Isocyanurat | 68 | 80 | 98 | 58 | 76 | 97 | 50 | 72 | 95 |
| IPDI-Isocyanurat | 68 | 88 | 95 | 50 | 72 | 97 | 35 | 72 | 97 |
| 2-MPDI-Isocyanurat | 78 | 87 | 97 | 68 | 80 | 96 | 60 | 76 | 96 |

* jeweils 30 s bei 130°C und Kalthärtung

## Patentansprüche

1. Massen für thermisch und oxidationsbeständige Polyurethanbeschichtungen, bestehend aus
a) einer organischen, polymeren Verbindung mit Hydroxylgruppen
b) einem Polyisocyanat, und
c) gegebenenfalls üblichen Hilfsstoffen wie Lösungsmittel, Dispergiermittel, Pigmente, Füllstoffe, Verlaufmittel,
dadurch gekennzeichnet, dass als Polyisocyanat (b) Isocyanatoisocyanurate der Formel

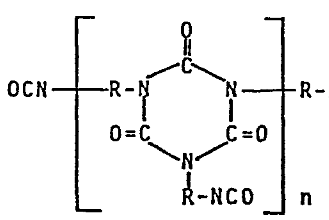

in der die einzelnen Reste R gleich oder verschieden sind und Kohlenwasserstoffreste einer der Formeln

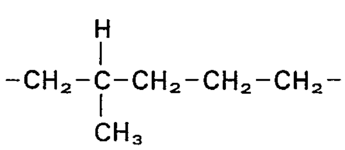

oder

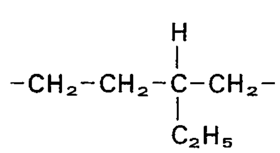

bedeuten und n eine ganze oder gebrochene Zahl von 1 bis 5 bedeutet, eingesetzt werden.

2. Beschichtungsmassen nach Anspruch 1, dadurch gekennzeichnet, dass als organische, polymere Verbindung mit Hydroxylgruppen (a) hydroxylgruppenhaltige Polyacrylatverbindungen eingesetzt werden.

3. Beschichtungsmassen nach Anspruch 1, dadurch gekennzeichnet, dass als organische, polymere Verbindung mit Hydroxylgruppen (a) hydroxylgruppenhaltige Polyester eingesetzt werden.

## Revendications

1. Masses pour revêtements de polyuréthanne résistant à la chaleur et à l'oxydation, composées de:
a) un composé polymère organique à groupes hydroxyle
b) un polyisoxyanate, et
c) éventuellement des adjuvants usuels tels que des solvants, agents de dispersion, pigments, charges, agents d'étalement,
caractérisées par le fait que, comme polyisocyanate (b), on utilise des isocyanato-isocyanurates de la formule

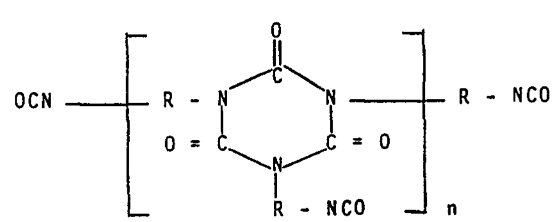

dans laquelle les différents restes R sont semblables ou différents et représentent des radicaux hydrocarbures de l'une des formules

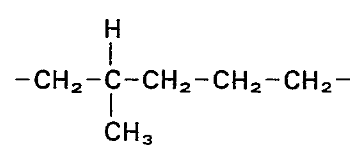

ou

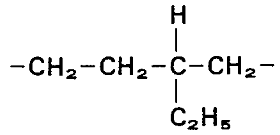

et n est un nombre entier ou fractionnaire d'une valeur de 1 à 5.

2. Masses de revêtement selon la revendication 1, caractérisées par le fait qu'on utilise, comme composé polymère organique à groupes hydroxyle (a), des composés polyacrylates contenant des groupes hydroxyle.

3. Masses de revêtement selon la revendication 1, caractérisées par le fait qu'on utilise, comme composé polymère organique à groupes hydroxyle (a), des polyesters contenant des groupes hydroxyle.

## Claims

1. Compositions to form heat-resistant and oxidation-resistant polyurethane coatings, comprising

(*a*) an organic polymeric compound having hydroxyl groups,

(*b*) a polyisocyanate, and optionally

(*c*) conventional additives such as solvents, dispersing agents, pigments, fillers and flow agents,

characterised in that isocyanato-isocyanurates of the formula

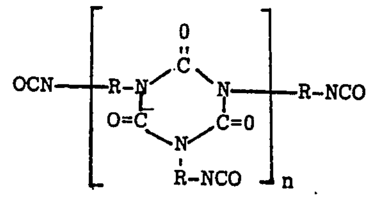

where the individual radicals R are identical or different and are hydrocarbon radicals of the formula

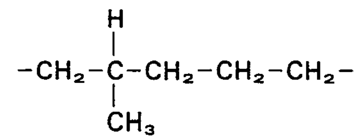

or

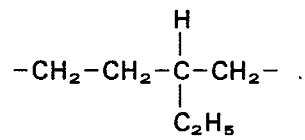

and n is an integer or fractional number from 1 to 5, are used as the polyisocyanate (*b*).

2. Coating compositions according to Claim 1, characterised in that polyacrylate compounds containing hydroxyl groups are used as the organic polymeric compounds (*a*) having hydroxyl groups.

3. Coating compositions according to Claim 1, characterised in that polyesters containing hydroxyl groups are used as the organic polymeric compounds (*a*) having hydroxyl groups.